# EUROPEAN PATENT APPLICATION

(11) **EP 4 696 833 A1**
(43) Date of publication of application: **18.02.2026**
(21) Application number: 25195550.6
(22) Date of filing: 12.08.2025
(51) Int. Cl.: D06P 5/13, B29B 17/02, C08J 11/08, C08J 11/28, B29B 17/04, B29K 105/00, B29L 31/00

(54) **PROCESS AND PLANT FOR REMOVING DYES FROM WASTE TEXTILES**

(30) Priority: 13.08.2024 EP 24194433
(71) Applicant: Sanko Tekstil Isletmeleri San. Ve Tic. A.S., 16400 Inegol - Bursa (TR)
(72) Inventor: KONUKO LU, Fatih, 16400 Inegol - Bursa (TR); ÖKTEM, Gözde, 16400 Inegol - Bursa (TR); KAPLAN, Gökhan, 16400 Inegol - Bursa (TR); LOYAN, Kenan, 16400 Inegol - Bursa (TR); HAMITBEYLI, Agamirze, 16400 Inegol - Bursa (TR); AKBULUT, Sabrettin, 16400 Inegol - Bursa (TR); ZENGIN, Nuriye, 16400 Inegol - Bursa (TR)
(74) Representative: Gislon, Gabriele

(57) **Abstract**

In a process for removing dyes from a waste textile material, including at least 50% by weight of polyester fibers, a batch of said textile material in an extraction chamber is extracted with a solvent that is circulated through the textile and the extraction chamber; said solution comprising solvent and extracted material is used as a solvent to extract dye from another batch of textile material, and in that said steps of extraction are repeated, until the amount of extracted material in said solution comprising solvent and extracted material reach a concentration whereby further dye extraction is impaired.

## Description

### Field of the invention

The present invention relates to a process and a plant for removing dyes from waste textiles in order to recycle textile material, such as fabrics, yarns, filaments and garments. In greater detail, the present invention relates to a process for recovering polyester material from dyed waste fabrics and garments.

### State of the art

Recycling pre-consumer, post-industrial, post-consumer, used, fabrics, also known as "waste textile" or "waste fabric", has become a primary target in the textile industry; new and efficient processes for recycling are being actively researched. One of the goals is to provide processes to to ensure textile-to-textile recycling of the materials that are present in widely used fabrics and textiles, in particular polyester. In other words, the industry is striving to produce polyester filaments from waste textiles rather than from waste water bottles.

Challenges for using post-consumer textiles in these processes include contaminants that may cause chemical reactions that lower the polyester molecular weight, and residues of other materials may weaken the fibres. A problem in recycling polyester or cotton containing fabrics lies in fact in the removal contaminants such as of dyes and polyurethanic materials (e.g. elastane filaments) from the polyester or cotton fibers and filaments of the fabric.

WO2022118244 discloses recycling waste polyester material, including waste textiles by dissolving the polyester in a solution comprising hexafluoroisopropyl alcohol and a chlorinated hydrocarbon and/or an aromatic hydrocarbon. Before dissolution, a pre-treatment with dichloromethane (DCM) is carried out to remove color and impurities from PET bottles and waste textile material. This method does not provide an effective and complete removal of the dyes.

US2022169786 describes a method for producing a decolorized polyester by removing a colorant from a polyester with a decolorizing agent containing a glycol ether-type compound having a boiling point at atmospheric pressure of 160 °C or higher while heating the decolorizing agent to a temperature equal to or lower than a melting point of the polyester.

EP3699355 discloses a method and system for decolorizing textile waste materials, dyed with disperse dyes, under hydrothermal environment using dye adsorbent materials that are magnetically charged. Textile materials are treated under stirring in a decolorization reactor containing water and magnetic activated carbon as dye absorbing material, under autogenic pressure as obtainable when heating to about 100°C to 170°C. An ultrasonic generator is started to accelerate release of the dye molecules from the textile materials into the water. The dyes released by the polyester fibers are adsorbed by the magnetic activated carbon that is collected by activating a magnetic field at the end of the process.

### Summary of the invention.

In general, the known methods result in a partial degradation of the polyester polymer material and/or the cotton fibers, and often in an only partial removal of the dyes; particularly, the applicant realized that operating under mild conditions is necessary to reduce polyester and/or cotton degradation. Degradation of the polyester may be detrimental to the possibility of re-using the recovered polyester material. Similarly, degradation of the cotton fibers would jeopardize the mechanical properties and possibly also the appearance, of yarns produced with the recycled cotton fibers.

In particular, it would be very useful to have a process that can remove in a short time all the dyes, such as disperse dyes and vat dyes, elastane filaments and decorations, from a dyed or printed/decorated textile material, without degrading or damaging the polyester and/or cellulosic fibers included in the textile.

A further problem is that polyester based fabrics and garments may often contain polyurethane material, either as elastane-type filaments in the fabric yarns or as a layer printed on the garment as a decoration, e.g. in sport garments. The presence of the elastomeric material may be a problem when the polyester fibers and/or cotton fibers are recycled.

An aim of the present invention is to solve the above problem and to provide a process for recycling waste fabric comprising polyester, particularly a process for removing dyes from waste materials comprising polyester fibers, that provides a safe, easy and environmentally clean way of recovering the polyester material from waste textile. Another aim of the present invention is to provide a process that allows the removal of dyes from waste textiles including polyester with reduced, or no, degradation of the polyester material. Particular aim of the present invention is to provide a process for removing dyes from waste textiles, particularly including polyester, to ensure that textile-to-textile recycling of polyester is obtained in an environmentally friendly (i.e., "green") way.

The decolorized materials may then be further recycled in ways known, per se, in the art. For example, decolorized polyester material may be further recycled by depolymerizing the polyester, or by recovering polyester as staple fibers. Preferably decolorized polyester material is converted into PET chips or beads which can be used in fiber spinning and/or moulding processes depending on the target field to be employed in. The cellulosic, e.g. cotton, fibers that might be present in a blend textile are treated together with the polyester fibers to remove dyes from said cotton fibers. The decolorized cotton fibers can then be removed, for example, by chemical or enzymatic digestion of the cellulosic fibers. Preferably, e.g. when the textile material includes less than 30% by weight, preferably less than 20% by weight of cotton, the textile material can be pretreated to reduce the amount of cotton or to remove the cotton content in the textile material to be extracted.

Similarly, the decolorized cotton or cellulosic material may be recycled in a way known per se, e.g. by mechanically providing cellulosic staple fibers, including regenerated cellulosic fibers, such as cotton fibers or regenerated cotton fibers, that can be worked into a yarn.

In particular with a pre-consumer material consisting in garments or fabrics, the said garments or fabrics may be de-colorized to a greige status (undyed) and recycled by subsequent dyeing or printing, or both, of the treated garment.

The problem is solved by means of the process according to claim 1 and by an apparatus according to claim 15.

### Detailed description

One object of the invention is, thus, a process for removing dyes from a textile material, particularly a waste textile material, said textile material including at least 50% by weight, preferably at least 60% by weight, more preferably at least 70% by weight, of polyester fibers, said process comprising the following steps:
a) providing a batch of said textile material in an extraction chamber;
b) extracting said batch of said textile with a solvent to provide a solution comprising solvent and extracted material, said extracted material including at least a dye, wherein said solvent is circulated entering said extraction chamber and exiting said extraction chamber, through said textile material, to extract said textile material, wherein said textile material is in a static, or substantially static, condition, during at least part of said extracting step, preferably during the entire extracting step;
c) removing said solution of solvent and extracted material from said textile;
characterized in that said solution comprising solvent and extracted material obtained in step b) and/or c) is used as a solvent to extract dye from another batch of textile material, and in that said steps b) and c) are repeated, preferably until the amount of extracted material in said solution comprising solvent and extracted material reach a concentration whereby further dye extraction is impaired

Advantageously, it has been observed that, by means of the process of the invention, recycling of waste textiles comprising polyester, e.g., polyester fibers, particularly removing dyes from waste textile materials comprising polyester fibers, can be performed in a safe, quick, easy and environmentally friendly way. Also, the process of the invention allows the removal of dyes from waste textiles including polyester fibers, with reduced, or no, degradation of the polyester material in the waste textile. The process of the invention also allows an effective removal of dyes from textiles including both polyester and cotton. Advantageously, when the waste textiles material includes, also, polyurethane materials, e.g., elastane, or polyurethane prints or coatings, such polyurethane materials are effectively removed. The process of the invention allows to easily and effectively isolate and recover polyester materials (particularly polyester fibers and filaments), as well as cellulosic materials, from waste textiles, e.g., from waste textiles including a plurality of different dyes. Furthermore, allows the recovering of substantially all the solvent used. Particularly, the process of the invention allows to obtain a solvent recovery ratio of at least 99%, and up to 99.9%.

As used herein, the term "extracted material" refers to a material including the dyes and, possibly, other components, removed from the waste textile material by treating the waste textile material, i.e., by extracting the waste textile material, with a solvent, according to the present description.

According to embodiments, the extraction chamber (or extractor) is a device known, per se, in the art. For example, the extraction chamber (extractor) may be according to the reactor disclosed in pending application EP24157391.4 in the name of the present applicant, herein incorporated by reference as far as the reactor structure is concerned. The reactor preferably comprises a closable reaction chamber configured to contain the waste textiles; the reactor is also connected to at least one tank to contain at least one of fresh solvent, dirty solvent and to a pump or other circulating means to feed and circulate said solvent through said chamber and the textile there contained. The reactor typically comprises a cage or basket provided with perforated walls to house the waste textiles in said chamber, said basket being removable from said chamber. Preferably said chamber comprises at least one perforated separation element housed in the basket to maintain the textiles in a still condition. Preferably the extraction chamber is provided with thermal insulation means to help maintain the solvent at the temperature required for best removal of dyes.

The textile material is held in the extraction chamber in a still, i.e. static, condition. The term "still" or "static" condition is intended to define that the textiles are housed in an extraction chamber and are held there while the solvent is fed through the textile material. The textile materials fill the chamber so that it does not move with the solvent, i.e. they are not displaced under the action of the flow of solvent.

Preferred solvents are DMF (Dimethylformamide) or DMAC (Dimethylacetamide) or a mixture of DMF or DMAC with alkali water, or mixtures thereof. Preferably, the solvent is DMF. In embodiments used to decolorize textiles including or consisting of dyed cotton fibers, the solvent comprises DMF and alkali water, preferably a reducing agent for the dye. As used herein, the term "alkali water" refers to water having a pH of at least 10, for example, in the range of from 10 to 13.5. pH can be adjusted by adding a base, such as NaOH and KOH to water.

The solvent is heated at a temperature suitable to remove dyes from the textile.

According to embodiments, step c) includes a step of separating the solution comprising solvent and extracted material from the textile material by centrifuging. Advantageously, the use of centrifugal force, particularly applied to the textile material impregnated with the solution comprising solvent and extracted material, after end of the extraction, allows to effectively separate the textile material from the solution comprising solvent and extracted material that has been picked-up by the textile material, thus resulting in a particularly effective removal of the dye and residual solvent from the textile material. This further results in less energy consumption for drying the recovered textile materials at the end of the process, because the vast majority of solvent and/or solution comprising solvent and extracted material has been already removed. Additionally, the use of centrifugal force allows, also, to reduce the number of extractions (step b)) required for removing the dye (and optionally other materials) from the textile material. Centrifugation is, also, a particularly safe technique for removing residual solvent from the textiles. According to embodiments, the step of centrifuging is carried out in the extraction chamber; in other words, according to embodiments, the extraction chamber is suitable to be used as a centrifuge.

According to embodiments, extraction step b) has a duration of from 2 minutes to 20 minutes, preferably from 5 minutes to 15 minutes, more preferably from 7.5 minutes to 12.5 minutes, most preferably 10 minutes. According to embodiments, the centrifugation step of the process is preferably carried out for 1 to 5 minutes; this results in a total process time of about 25-30 minutes to complete the dye removal from the pieces of textiles. The short time required by the present invention process is a surprising result when compared with the time requested by prior art processes.

According to embodiments, the temperature of the solvent (or the solution comprising solvent and extracted material) in the extraction chamber is in the range of from 80°C to 140°C, preferably from 82°C to 135°C. the temperature may be selected according to the solvent used and the dye to be removed. If the polyester is not dope-dyed the maximum temperature may be as low as 110°C. For example, with DMF used as the solvent, the temperature of the solvent (or the solution comprising solvent and extracted material) in the extraction chamber may be about 90°C.

Advantageously, the solvent in contact with the textile material, namely the mixture of solvent and textile pieces, is maintained at a temperature according to what above disclosed. To this purpose, the parts of the apparatus that are intended to contain textile and solvent are preferably thermally insulated: in particular, preferably at least the extraction chamber and the duct for feeding the solvent/textile mixture to the centrifuge, are thermally insulated. In preferred embodiments of the plant, all the ducts, pipes and tanks and reservoirs that are intended to contain solvent are thermally insulated by means known per se in the art.

According to embodiments, step b) is repeated at least two times and, preferably, between each repetition, removal of the solution of solvent and extracted material from textiles, according to step c), is carried out, preferably centrifugating. In embodiments, centrifuging can be carried out in the extraction chamber. For example, when the extraction chamber is a washing machine or a solvent cleaning machine, the extraction chamber may perform centrifugation, optionally washing and optionally drying. According to embodiments, the extraction chamber is suitable to be used as a centrifuge. According to embodiments, centrifugation is carried out at g-force in the range of from 250 to 5000, preferably from 800 and 2000, more preferably from 900 to 1200., for a time in the range of from 0.5 to 10 minutes, preferably from 1 to 5 minutes. For example, centrifugation is carried out at a g-force from 250 to 5000 preferably from 800 and 2000, more preferably from 900 to 1300, e.g., 1200. In embodiments, after each centrifugation, the solution of solvent and extracted material is re-used to treat another batch of textile material.

According to embodiments, part of the solution comprising solvent and extracted material obtained during step b) is removed from said extraction chamber before step c). In other words, in embodiments, before step c) the solution comprising solvent and extracted material obtained during step b) is removed from said extraction chamber.

According to embodiments, step c) is carried out in a centrifuge. For example, the centrifuge can be selected from vertical peeler type bottom discharge centrifuge, horizontal peeler type centrifuge, horizontal pusher type centrifuge, decanter type centrifuge. According to embodiments, the centrifuge comprises a filter and a scraper. According to embodiments, the extraction chamber is suitable to be used as a centrifuge.

In embodiments, after centrifugation, a washing step is carried out. Preferably, the washing is carried out in the centrifuge (e.g., in the extraction chamber, when the extraction chamber is suitable to be used as centrifuge). In that case, the centrifuged textile material can be washed using fresh solvent that is fed to the inner part of the centrifuge by means of a solvent feeding line; during washing the centrifuge is rotated at a reduced speed, i.e. a speed that is effective to wash the textile pieces, preferably in the range of 300 to 700 rpm, preferably 400 to 600 rpm. According to embodiments hot washing is carried out, i.e. the temperature of the solvent fed to the centrifuge for the washing step is high enough to quickly bring the temperature of the mixture of pieces of textile and solvent to a temperature equal to or higher than the temperature of the solvent used for extraction of the textile material. The washing is preferably carried out for a time in the range of 3 to 10 minutes, more preferably about 5-6 minutes are enough to remove the remaining dye. After washing, the textiles are centrifuged again to recover the residual solvent on textiles used in washing step. The final content of solvent in the textile pieces is generally about 4-7% by weight: this provides the advantage of having an "annular cake", i.e. a thick layer of small pieces of fabric that are adhering to the lateral wall of the centrifuge at the end of a centrifugation step. Such a cake can be easily removed from said wall by the above mentioned scraper.

After centrifugation and, optionally, washing (usually with solvent), the textiles may be washed with water. In embodiments, washing with water is carried out in the centrifuge (e.g., in the extraction chamber when it is suitable to be used as a centrifuge) After centrifugation and, optionally, washing (usually with solvent), and optionally washed with water, the textiles are dried. For example, the centrifuged textiles may be moved from the centrifuge to a drying device to be dried. Advantageously, the solvent and the water can be also recovered, regained and recollected, e.g., during the drying step. According to embodiments, after centrifugation and, optionally, washing with hot solvent the textile pieces within the centrifuge, before drying, the textiles, generally samples of the treated textile pieces, are checked in a quality control unit, wherein the amount of dye in the textiles is determined according to techniques that are, per se, known in the art, for example color measurements with spectrophotometry, i.e. Datacolor If the dye is still present in the textiles in an unacceptable amount, the textile material is moved to the extraction chamber to be extracted again, according to step b) of the process of the invention. If the dye has been sufficiently removed from the textiles, the textiles are removed from the quality control unit and dried. In embodiments, the textiles undergo washing with water to remove the organic solvent, namely DMF or DMAC, before being forwarded to the drying step.

According to embodiments, the textile material obtained in step b) is moved from the extraction chamber to a storage tank, preferably before being moved to a centrifuge. Advantageously, the textile material obtained in step b) can be moved from the extraction chamber to a storage tank, for example, when the centrifuge is not able to hold the entire amount of textile material treated in the extraction chamber; the textile material obtained in step b) can be moved from the extraction chamber to a storage tank so that a further batch of textile material can be extracted in the extraction chamber, while the centrifugation of the textile material obtained in step b) is completed.

According to embodiments, when the amount of the extracted material in said solution comprising solvent and extracted material is in a concentration whereby further dye extraction is impaired, the solution comprising solvent and extracted material is fed to a distillation device, whereby said solvent is separated from said extracted material. In this case, advantageously, the solvent is recovered and reused. Also, extracted materials, such as dyes, elastane and/or other polyurethane materials, can be recovered to be further processed. For example, when all textiles to be processed are dyed with the same dyestuff (like disperse or vat), dyestuff can also be regained and re-used without further treatments or processes.

According to embodiments, distillation, particularly distillation of DMF, is carried out at a temperature in a range from 70°C to 100°C, preferably from 75°C to 95°C, more preferably from 80°C to 90°C, and at a pressure in the range of from 15 to 90 mbar, preferably from 20 to 85 mbar, more preferably from 40 to 80 mbar.

According to embodiments, the textile material is provided to the extraction chamber in a form selected from powder, fibers, filaments, yarns, fabrics, clippings (i.e., pieces) of fabrics, garments, clippings (i.e., pieces) of garments and mixtures thereof. The textile material in the form of powder may be obtained by grinding other forms of waste textiles, such as, for example, fabrics or garments. According to embodiments, the process of the invention further comprises a step of grinding the waste textile material, e.g., a material consisting of polyester fibers, to obtain a powder, preferably a polyester powder.

According to embodiments, the process of the invention further comprises a step of mechanically treating the textiles, preferably fabric and garments, to reduce their size, to obtain pieces of textiles, preferably pieces of fabric and garments (i.e., clippings of fabrics and garments). In embodiments, the material is provided to the extraction chamber after the step of mechanical treatment in the form of pieces of fabric or garments (i.e., clippings) wherein at least 90% of said pieces have size from 1 mm to 50 mm.

According to embodiments, the material is polyester based fabric, optionally with elastane filaments, and is provided to the extraction chamber in the form of pieces of fabric or garments (i.e., clippings), wherein 90% of said pieces of fabric or garments has a size in the range from 2 mm to 2.5 mm. Pieces of fabric and/or garments having the mentioned size can be obtained according to techniques and machines that are known, per se, in the art, for example a cutting device or a shredder device. According to other embodiments, the material contains cotton fibers, preferably at least 50% cotton fibers; the fabric is provided to the extraction chamber in the form of pieces of fabric or garments (i.e., clippings), wherein 90% of said pieces of fabric or garments has a size of at least 20 mm, preferably in the range from 20 mm to 50 mm.

An advantage of having the textile waste material, namely a fabric, woven or knitted, that is in the form of reduced size pieces as above discussed, is that the extraction time is dramatically reduced and that the mixture of small fabric pieces and hot solvent may be easily transferred from one part to another part of the apparatus, i.e. of the plant.

According to embodiments, when the textile material is 100% cotton, the textiles, such as fabrics and garments, a step of mechanically opening such textiles (e.g., yarns fabrics and garments) to obtain a fiber tufts may be carried out. The process of mechanically opening a textile is a process known in the art. Machines known as tearing machines are commonly used for such a task, during a so called tearing or unravelling step. Suitable machines are commercially available under the name Laroche, part of the Andritz group (FR) and from other producers such as Dell'Orco & Villani (IT) and Trützschler (DE). Preferred tearing machines comprise a sequence of several rotating cylinders or drums, covered with opening means such as saw wires or steel pins which tear the textile, causing the textile structure to progressively open up to bundles of fibers, or tufts of fibers. The terms "tufts", "fiber tufts" and "tufts of fibers" is thus a known condition of the textile, wherein a textile is converted into an aggregate of fibers as obtainable in a tearing machine wherein the textile is treated by a series of rotating drums provided tearing means such as steel pins. The fiber tufts obtained by known machines are thus an aggregate, or bundle, of fibers that are no longer in the form of yarns, but are in a physical condition similar to that of raw cotton after ginning and of cotton wool condition.

According to embodiments, the textile material is mixed with the solvent in a bath ratio of textile pieces (in kg) to solvent (in liters) that is in the range of 1:8 to 1:20, preferably 1:10 to 1:20. The mixture (that preferably has a slurry-like consistency) is thus suitable to be moved, namely by pumping or feeder screws or archimede screws, and is then fed along the apparatus, e.g. from the extraction chamber to the centrifuge.

According to embodiments, the textile material includes a plurality of dyes. According to embodiments, the polyester fibers in the textile material may include at least a dye selected from disperse dyes.

According to embodiments, the waste textile material may further include cellulosic fibers, preferably cotton fibers. In embodiments, the cellulosic fibers, preferably cotton fibers, in the textile material, can include at least one dye selected from vat dyes, reactive dyes, direct dyes, sulfur dyes, and mixtures thereof. In embodiments, cellulosic fibers, preferably cotton fibers, in the textile material, can include at least one vat dye, preferably indigo.

For example, fabrics that may be recycled by means of the claimed process may be those of polyester sport apparel, e.g. T-shirts and garments printed with decorations on a thin layer or membrane of polyurethane material applied to the garment. The polyurethane layer is dissolved by the solvent together with the inks that form the decorative element (e.g. a logo or a number etc.).

In the present description reference is made to "polyurethane materials" or to PU material; this term is encompassing elastomeric materials (such as elastane and spandex) used in the yarns (usually in the yarn's core) and any other polyurethane material possibly present on or in the fabric, e.g. as part of a decoration (e.g. a printed decoration) or a coating.

According to embodiments, at least part of the polyester fibers is dyed, preferably dyed with at least one disperse dye. According to embodiments, all the polyester fibers in the textile material are dyed, preferably dyed with at least one disperse dye, optionally with a plurality of disperse dyes.

According to embodiments, step b) is carried out more than once, preferably in a different extraction chamber each time, and/or step c) is carried out more than once, optionally in a different centrifuge each time. The extraction chambers are arranged in series. In an embodiment each extraction chamber is provided with a centrifuge.

According to embodiments, the extraction chamber is a first extraction chamber, and the textile material, after a first extraction step b), is fed from the first extraction chamber to a first centrifuge for a first removal step c). Subsequently, the textile material is fed from the first centrifuge to a second extraction chamber for a second extraction step b) and, then, from the second extraction chamber to a second centrifuge for a second extraction step c). In embodiments, the first and second extraction steps b) and the first and second removal steps c) are carried out in two different extraction chambers and two different centrifuges, respectively.

According to embodiments, several batches of waste textiles are extracted with the same batch of solvent. For example, after the dye is completely removed after extraction in a second extraction chamber, the solvent used in the second extraction chamber and/or said second centrifuge, preferably from said extraction chamber, is fed to the first extraction chamber to extract a subsequent batch of textile material. In this case, advantageously, the solvent (i.e., the solution comprising solvent and extracted material) removed from the second extraction chamber and/or said second centrifuge is used to extract a subsequent batch of textile material, to further increase the concentration of the extracted material in the solution, thus reducing the overall amount of solvent required for the process. For example, the waste textile material may be extracted with solvent in a first extraction chamber, centrifuged and then extracted again in a second extraction chamber and subsequently centrifuged again, preferably in a second centrifuge. Fresh solvent may be used for the second extraction step. A solution comprising solvent and extracted material is obtained after the second extraction step; said solution (including the residual solution recovered from the second centrifuge, after centrifugation of the textile material after second extraction, and fed back to the second extraction chamber) can be reused for multiple extractions in the second extraction chamber, e.g., up to 20, preferably up to 30, more preferably up to 40 extractions. At this point, the solution comprising solvent and extracted material may be fed to the first extraction chamber and reused for extraction waste textiles until the extracted material in the solution reach a concentration whereby further extraction of dye is impaired. When the extracted material in the solution reached a concentration whereby further extraction of dye is impaired, the solution comprising solvent and extracted material is fed to a distillation device, whereby the solvent is distilled and recovered. In other words, when further dye extraction in the first extraction chamber is impaired, the solution comprising solvent and extracted material is fed to a distillation device and the solution comprising solvent and extracted material obtained in the second extraction chamber is fed to the first extraction chamber. In this case, advantageously, the concentration of extracted material in the solution comprising solvent and extracted material obtained in the second extraction chamber is not limiting, unless said the solution comprising solvent and extracted material obtained in the second extraction chamber is suitable to perform extraction step b) on a further batch of textiles in the first extraction chamber.

According to embodiments, steps b) and c) are repeated more than twice in more than two extraction chambers and centrifuges, and the solvent removed from any extraction chamber different from the first chamber is fed to the previous extraction chamber. In this case, advantageously, the solvent (i.e., the solution comprising solvent and extracted material) removed from any second or further extraction chamber is used to extract a subsequent batch of textile material, in the previous extraction chamber, so that the concentration of the extracted material in the solution increases any time the solution is moved to an extraction chamber to a previous one, whereby a new batch of textile material is extracted, for the first time, in the first extraction chamber, with a solution comprising solvent and extracted material, and subsequently treated in the following extraction chambers using solutions having a progressively lower concentration of extracted material.

According to embodiments, the solvent (i.e., the solution comprising solvent and extracted material) exiting the extraction chamber is filtered. The filtering maximises the quantity of the waste textile that remains in the extraction chamber while maintaining the solution comprising solvent and extracted material free from solid bodies.

According to embodiments, the solvent used in step b) already contains extracted material, said extracted material including at least a dye, before starting step b). In other words, according to embodiments, the solvent used in step b) is in the form of a solution comprising solvent and an extracted material, said extracted material including at least a dye. In embodiments, the solvent already containing extracted material, can be fed to the extraction chamber from a solvent storage tank. In embodiments, such solvent storage tank is configured to receive the solutions comprising solvent and an extracted material exiting from the extraction chamber and/or the centrifuge. In embodiments, the extracted material in the solution may derive from other processes and/or or plants. In embodiments, the extracted material in the solution may derive from a batch of textile material, previously treated according to the process of the invention.

According to embodiments, the solvent comprises DMF (Dimethylformamide) or DMAC (Dimethylacetamide) or a mixture of DMF or DMAC with alkali water, or mixtures thereof. Preferably, the solvent is DMF. In embodiments, the solvent comprises DMF and alkali water. As used herein, the term "alkali water" refers to water having a pH of at least 10, for example, in the range of from 10to 13.5. pH can be adjusted by adding a base, such as NaOH and KOH to water.

According to embodiments, the bath ratio textile/solvent (kg/liters) is in the range from 1/3 to 1/20 preferably from 1/3.5 to 1/12, more preferably from 1/4 to 1/10. In embodiments, the bath ratio textile/solvent (kg/liters) is in the range from 1/3 to 1/20 preferably from 1/10 to 1/20. In embodiments, additional solvent and/or additional solution comprising solvent and extracted material is added to maintain the bath ratio in the above-mentioned range.

According to embodiments, the step c) is carried out in a centrifuge at a g-force in the range of from a g-force from 250 to 5000, preferably from 800 and 2000, more preferably from 900 to 1300, for a time in the range of from 0.5 to 10 minutes, preferably from 1 to 5 minutes. The force exerted on a sample in a centrifuge is a function of the rotation speed of the centrifuge (RPM) and the radius of the rotor. Knowing the radius of the rotor in centimeters, the equation to calculate G-Force (gravitational force equivalent) is: *G-Force = 0.00001118 x Rotor Radius x (RPM)².* According to embodiments, the extraction chamber is suitable to be used as centrifuge.

In embodiments, the waste textile material may be pre-treated before being extracted according to step b). In embodiments, for example, the size of the waste textile material can be reduced, e.g., by cutting fabrics or garments (e.g., 100% PET fabrics or garments) into clippings, of by cutting clippings (e.g., 100% PET clippings) to further reduce their size, or by grinding fabrics or garments or clippings to obtain a powder, particularly a 100% PET powder.

According to embodiments, the material is pre-treated to obtain pieces of fabric or garments (i.e., clippings) having size from 1 mm to 50 mm, preferably from 2 mm to 10 mm, more preferably from 2 mm to 2.5 mm. According to embodiments, when the textile material contains cotton (at least 50% cotton) the size of the pieces is in the range of 20 to 50 mm. In embodiments where the fabric is 100% cotton, the textiles, such as fabrics and garments, a step of mechanically opening such textiles (e.g., yarns fabrics and garments) to obtain a fiber tufts can be carried out. Pieces of fabric and/or garments having the mentioned size can be obtained according to techniques and machines that are known, per se, in the art, for example a cutting device or a shredder device

In embodiments, the waste textile material can be reduced to fibers. For example, fabrics, garments or clippings (e.g., 100% PET fabrics, garments or clippings) can be converted into fibers (e.g., 100% PET fibers). In embodiments, when the textile material includes less than 50% by weight, preferably less than 30% by weight of cotton, the textile material can be pretreated to reduce the amount of cotton in the textile material to be extracted. For example, the amount of cotton in the textile may be reduced by pre-treating the waste textile with cellulase enzymes or with chemical reagents suitable for depolymerizing cotton (or other cellulosic materials), such as treatment with inorganic or organic acids, according to techniques that are known, per se, in the art. In embodiments, when the textile material includes elastane fibers, the textile material can be pretreated to reduce the amount of elastane in the textile material to be extracted. For example, the amount of elastane in the textile may be reduced by pre-treating the waste textile with DMF according to techniques that are known, per se, in the art. Advantageously, when the process of the invention comprises a step of pre-treating the waste textile material, the process of the invention results to be particularly efficient.

According to embodiments, the textile material consists of polyester fibers. In other words, according to embodiments, the textile material can be selected from polyester fibers, polyester filaments, polyester yarns, polyester fabrics, clippings of polyester fabrics (i.e., 100% polyester fabrics), polyester garments, clippings of polyester garments and mixtures thereof. For example, the textile material can be selected from fabric consisting of polyester fibers (i.e., 100% polyester fabrics), clippings consisting of polyester fibers (i.e., clippings from 100% polyester fabrics or garments), polyester fibers, or mixtures thereof. According to embodiments, at least part of the polyester fibers in the textile material consisting of polyester fibers is dyed. According to embodiments, all the polyester fibers in the textile material consisting of polyester fibers are dyed. According to embodiments, the textile material consisting of polyester fibers includes a plurality of dyes, for example a plurality of disperse dyes.

According to embodiments, the textile material is selected from fabrics consisting of polyester fibers, clippings (i.e., pieces of fabrics and/or garments optionally having the above discussed size) consisting of polyester fibers and mixtures thereof, wherein at least part of said polyester fibers is dyed with at least one disperse dye. In this case, solvent is preferably DMF, and the temperature of said solvent (or the solution comprising solvent and extracted material) used in said step b) in said extraction chamber and in the step of washing in the centrifuge after a first centrifugation, is in the range of from 85°C to 105°C, preferably about 95°-100°C.

According to embodiments, the textile material is polyester fibers (i.e., separated fibers), and said polyester fibers are dyed with at least one disperse dye. In this case, the solvent is preferably DMF, and the temperature of said solvent (or said solution comprising solvent and extracted material) used in said step b) in said extraction chamber and in the step of washing in the centrifuge after a first centrifugation, is in the range of from 80°C to 110°C, preferably from 85°C to 105°C, e.g., 100°C.

According to embodiments, the waste textile further comprises at least a polyurethane material, preferably elastane. According to embodiments, the textile material comprises polyester fibers and further comprises at least a polyurethane material, preferably elastane. In this case, advantageously, the polyurethane materials, such as elastane, included in the textile material is extracted together with dyes. For example, the textile material may comprise at least 90% by weight of polyester fibers and further comprise one or more polyurethane materials, preferably elastane, more preferably at most 10% by weight of elastane. In a particular embodiment, the textile material includes 90% by weight of polyester fibers and 10% by weight of elastane.

According to embodiments, the textile material comprises at least 90% by weight of polyester fibers and at most 10% by weight of elastane fibers, and at least part of said polyester fibers is dyed with at least one disperse dye. In this case, the solvent is preferably DMF, and the temperature of said solvent (or said solution comprising solvent and extracted material) used in said step b), in said extraction chamber, and in the step of washing in the centrifuge after a first centrifugation, is in the range of from 85°C to 105°C, and preferably is about 95°C.

According to embodiments, the textile material comprises polyester fibers and further comprise at least a cellulosic material, preferably fibers. For example, the textile material may comprise at least 50%, preferably 60%, more preferably 70%, by weight of polyester fibers and further comprise cellulosic fibers, for example at most 50%, preferably 40%, more preferably 30%, by weight cotton fibers.

According to embodiments, at least part of the cellulosic fibers in the textile material is dyed. According to embodiments, all the cellulosic fibers in the textile material are dyed. According to embodiments, the textile material comprises cellulosic fibers including a plurality of dyes, for example a plurality of vat dyes.

According to embodiments, the textile material includes dyed cellulosic fibers, preferably dyed cotton fibers. Dyed cellulosic fibers may include at least one dye selected from vat dyes, reactive dyes, pigments, direct dyes, sulfur dyes and mixtures thereof. According to embodiments, the textile material includes dyed cellulosic fibers, preferably dyed cotton fibers and the solvent is preferably a mixture of DMF and water and a base, optionally comprising a reducing agent. In other words, in embodiments, the solvent is preferably a mixture of DMF and alkali water, optionally further comprising a reducing agent. Suitable reducing agents can be selected from the group consisting of alkali metal hydrosulfites, sulfides, thiosulfates, and oxalates; thiourea dioxide; alkali metal sulfoxylate formaldehyde, hydroxy acetone and derivatives of sulphinic acid. For example, the reducing agent may be Na₂S₂O₄.Suitable bases are NaOH, KOH and mixtures thereof.

According to embodiments, the textile material comprises at least 50%, preferably 70%, by weight of polyester fibers and at most 50%, preferably 30%, by weight of cotton fibers, and at least part of said polyester fibers is dyed with at least one disperse dye, and at least part of said cotton fibers is dyed with at least a dye selected from vat dyes, reactive dyes, pigments, direct dyes and sulfur dyes. In this case, the solvent is preferably a mixture of DMF and water comprising a base and optionally a reducing agent, and the temperature of said solvent (or said solution comprising solvent and extracted material) used in said step b) and in the step of washing in the centrifuge after a first centrifugation, in said extraction chamber, is in the range of from 85°C to 110°C, preferably about 95°C.

According to embodiments, the textile material comprises polyester fibers and further comprises at least a polyurethane material, preferably elastane, and at least a cellulosic material, preferably cotton, more preferably cotton fibers. For example, the textile material may comprise at least 50%, preferably 60%, more preferably 70%, by weight of polyester fibers and further comprise elastane and cellulosic fibers, for example at most 50%, preferably 40%, more preferably 30%, by weight of elastane and cotton fibers.

According to embodiments, the textile material comprises at least 50%, preferably 70%, by weight of polyester fibers and at most 50%, preferably 30%, by weight of cotton fibers and elastane fibers, and at least part of said polyester fibers is dyed with at least one disperse dye and wherein at least part of said cotton fibers is dyed with at least a dye selected from vat dyes, reactive dyes, pigments, direct dyes and sulfur dyes. In this case, the solvent is preferably a mixture of DMF and water comprising a base and optionally a reducing agent, and the temperature of said solvent (or said solution comprising solvent and extracted material) used in step b), in said extraction chamber and in the step of washing in the centrifuge after a first centrifugation, is in the range of from 95°C to 105°C, preferably about 100°C.

According to embodiments, the textile material may include cellulosic fibers dyed with at least one vat dye, optionally a plurality of vat dyes.

According to embodiments, the textile material may include a mixture of disperse dyes and vat dyes, e.g., polyester fibers dyed with ai least one disperse dye and cellulosic fibers dyed with at least one dye.

According to embodiments, the textile material includes a vat dye different from indigo, and said solvent (or the solution comprising solvent and extracted material) further includes water and a base, and optionally a reducing agent. Advantageously, the presence of a reducing agent allows the reduction of the vat dyes to the corresponding leuco form, so that said vat dyes are easily removed from the textile.

In embodiments, the vat dye is indigo. Advantageously, when the vat dye is indigo, the presence of water, base and reducing agents together with the solvent may not be required. In other words, indigo is removed by the solvent (DMF, DMAC or mixtures thereof) or by the solution comprising solvent and extracted material, whereby the presence of water and reducing agents may not be required. However, in embodiments, the vat dye is indigo and said solvent (or the solution comprising solvent and extracted material) further includes water and a reducing agent and a base.

According to embodiments, the textile material includes at least a cellulosic material, preferably cotton, more preferably cotton fibers, and indigo.

In embodiments, the solution obtained in step b) and/or c) is used as a solvent to extract dye from another batch of textile material up to 20 times, preferably up to 30 times, more preferably up to 40 times.

In embodiments, when a plurality of extractions steps are to be performed, each extraction in a different extraction chamber, the solvent (or the solution comprising solvent and extracted material) can be used for up to 20, preferably up to 40, more preferably up to 60 extraction cycles, i.e., 20, preferably 40, more preferably 60 extractions, i.e., for 20, preferably 40, more preferably 60 batches of waste textiles. For example, considering the use of three extraction chambers, for the first extraction chamber, the solvent can be used 20 times (depending on, e.g., the concentration of the dye on the waste textile), and the solvent used in second and third extraction chamber will also be used 20 times in the second and third extraction chamber. After the dye in the solvent (i.e., the solution comprising solvent and extracted material) in the first extraction chamber reaches a concentration wherein further dye extraction is impaired, the solvent in the second chamber, that has been already used 20 times is sent to first extraction chamber to be used, e.g., 20 times again. Similarly, the solvent in the third chamber, that has been already used 20 times is sent to second extraction chamber to be used, e.g., 20 times again. For example, dye extraction is impaired after that the solvent has been used for 60 extractions.

According to embodiments, the solution obtained in step b) and/or c) is used as a solvent to extract dye from another batch of textile material, and said steps b) and c) are repeated until the amount of extracted dye in said solution comprising solvent and extracted material reach a concentration whereby further dye extraction is impaired.

According to embodiments, the solution obtained in step b) and/or c) is used as a solvent to extract dye and optionally polyurethane (preferably elastane) from another batch of textile material, and in that said steps b) and c) are repeated until said solution comprising solvent and extracted material reach a viscosity whereby further dye extraction is impaired.

As used here, dye extraction is impaired means that the solvent used in the extraction step, namely in first extraction chamber, is no longer able to reduce the amount of dye in the waste textile. This may be verified by checking the concentration of dye in the solvent, i.e. the concentration of dye in the solution comprising solvent, dye and extracted material. In other words, at this point the solvent is saturated and has reached the end of its extraction capability based on the content of dyes and non-PET material. The saturation level of the solvent is determined by analyzing periodic samples taken from a non-saturated solution tank and/or samples taken along the lines of the apparatus of the invention.

According to embodiments, during said step b), said solvent, or said solution comprising solvent and extracted material, is circulated entering said extraction chamber and exiting said extraction chamber, through said textile material.

According to the invention, during said step b), the solvent, or the solution comprising solvent and extracted material, is circulated through the extraction chamber and the waste textile therein housed by entering the extraction chamber at an inlet and exiting the extraction chamber at an outlet, through said textile material, to extract the textile material, wherein the textile material is in a static (i.e., still), or substantially static (i.e., substantially still), condition. The textile materials, e.g. fabrics or garments or fibers, are housed in the extraction chamber, which is still, i.e. static. The textile material is, too, in a still, i.e. static, condition apart for possible movement imparted by the flow of the solvent that is circulated, e.g. with a pump, through the static extraction chamber and through the textiles.

Another object of the present invention is an apparatus for removing dyes from a textile material in a process according to the invention, the apparatus comprising at least one extraction chamber configured to treat the textile material with the solvent, at least a centrifuge for separating the solution comprising solvent and extracted material from the textile material, at least one fresh solvent storage tank and at least one distillation device, wherein said fresh solvent storage tank is configured to feed said fresh solvent to said extraction chamber, and configured to receive said solvent from said distillation device, and wherein said distillation device is configured to receive said solution comprising solvent and extracted material from said extraction chamber and/or said centrifuge.

According to embodiments, the fresh solvent storage tank is configured to feed said fresh solvent to said centrifuge.

According to the invention, the extraction chamber is configured to be in a still, i.e. static, during operation, wherein the solvent (or the solution comprising solvent and extracted material) is circulated with circulating means, e.g. with a pump, through the static extraction chamber and through the textiles. According to embodiments, the extraction chamber is configured to act also as centrifuge. In this case, the extraction chamber and the centrifuge are the same device.

According to embodiments, the apparatus may further comprise at least one storage tank, configured to receive the mixture of textile material and solvent from the extraction chamber, e.g. after step b) of the process, and to feed the textile material to the centrifuge, e.g. to perform step c).

According to embodiments, the apparatus may further comprise at least one solvent storage tank, configured to feed the solvent, or the solution comprising solvent and extracted material, to the extraction chamber, and configured to receive the solution comprising solvent and extracted material from the extraction chamber and/or from the storage tank and/or from the centrifuge.

According to embodiments, the apparatus further comprises at least one distillation device, configured to receive the solution comprising solvent and extracted material from said extraction chamber, to separate said extracted material from said solvent. Preferably, the solution comprising solvent and extracted material from said extraction chamber is fed to said distillation device when the amount of extracted material in the solution comprising solvent and extracted material reach a concentration whereby further dye extraction is impaired. In embodiments, a suitable pressure value in the distillation device is in the range of 15 to 90 mbar, preferably 20 to 85 mbar, most preferably 40 to 80 mbar.

According to embodiments, the apparatus comprises a plurality of extraction chambers and a plurality of centrifuges, and the extraction chambers and the centrifuges are arranged in a series, and the apparatus further comprises means for feeding the textile material along said series of extraction chambers and centrifuges, to provide a flow of textile material, wherein at least one centrifuge is connected with an extraction chamber upwards with respect to the flow of textile and is connected to another extraction chamber downwards with respect to the flow of textiles.

According to embodiments, the centrifuge is selected from vertical peeler type bottom discharge centrifuge, horizontal peeler type centrifuge, horizontal pusher type centrifuge, decanter type centrifuge. Preferably, the centrifuge comprises a filter to retain fibers and particules that exit the centrifuge, and a scraper. The scraper has the aim of removing wet fabric pieces from the inner wall of the centrifuge, where they are deposited as a layer or as a cake of clippings after centrifugation. According to embodiments, the extraction chamber is configured to act also as centrifuge; in other words, in embodiments, the extraction chamber is suitable to be used as centrifuge.

According to embodiments, after centrifugation and, optionally, washing with solvent and optionally washing with water, before drying, the textiles are moved to a quality control unit, wherein the amount of dye that is still present in the textiles is determined. Thus, in embodiments, the apparatus comprises a quality control unit, where the amount of dyes present in the treated textile pieces after centrifugation and after washing, before drying, is determined. The amount of dye that is still present in the textiles can be determined according to techniques that are, per se, known in the art, for example color measurements with spectrophotometry, i.e. Datacolor. If the dye is still present in the textiles in an unacceptable amount, the textile material is moved to the extraction chamber to be extracted again, according to step b) of the process of the invention. If the dye has been sufficiently removed from the textiles, the textiles are moved to a drying unit. In embodiments, the solution comprising solvent and extracted material exiting from the centrifuge after centrifugation is filtered. Thus, according to embodiments, the apparatus may further comprise one or more filters configured to the solution comprising solvent and extracted material exiting from the centrifuge after centrifugation. In a preferred embodiment a washing device is located upward of the drying unit to remove the solvent, namely DMF by washing the treated textile pieces with water.

When the apparatus comprises a plurality of extraction chambers and a plurality of centrifuges, according to embodiments, each extraction chamber may be connected to the previous extraction chamber, with respect to the path followed by the textiles from a first extraction chamber to a following extraction chamber, with solvent feeding means, said solvent feeding means being configured to feed the solution comprising solvent and extracted material exiting from each extraction chamber to the previous extraction chamber.

When the apparatus comprises a plurality of extraction chambers and a plurality of centrifuges, according to embodiments, the last extraction chamber of the series is connected to a fresh solvent storage tank, said fresh solvent storage tank being configured to feed fresh solvent to said last extraction chamber.

When the apparatus comprises a plurality of extraction chambers and a plurality of centrifuges, according to embodiments, the apparatus may further comprise a plurality of storage tanks, each storage tank being arranged downwards to an extraction chamber and upwards to a centrifuge (i.e., between an extraction chamber and a centrifuge), with respect to the flow of textile, and/or each storage tank being arranged downwards to a centrifuge and upwards to an extraction chamber.

Further aspects and advantages in accordance with the present disclosure will be discussed more in detail with reference to the enclosed drawings, given by way of non-limiting example, wherein:
- Fig.1 shows a schematic representation of an embodiment of the process and apparatus of the invention including one extraction chamber and one centrifuge;
- Fig. 2 shows a schematic representation of an embodiment of the process and apparatus of the invention including two extraction chambers and two centrifuges;
- Fig. 3 shows a schematic representation of an embodiment of the process including four extraction chambers and four centrifuges;
- Fig. 4 is a photograph showing the aspect of textile material (small pieces of polyester fabric) after size reduction step, before extraction step;
- Fig. 5 is a photograph showing the aspect of textile material (small pieces of polyester fabric) at the end of the process.

In the attached drawings, continuous arrows schematically represent the flow of the textile material while dashed arrows schematically represents the flow of the solvent and/or the solution comprising solvent and the extracted material.

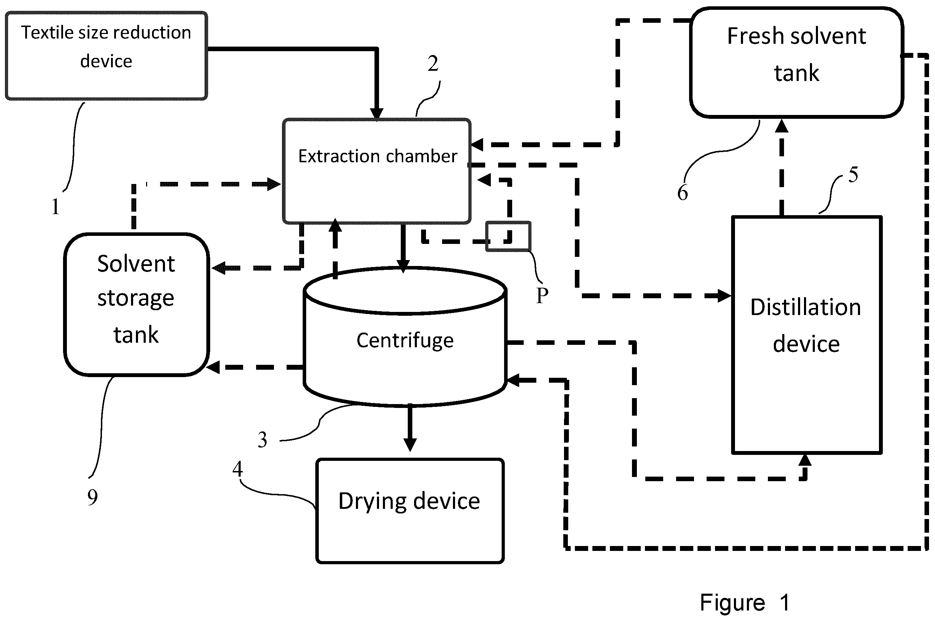

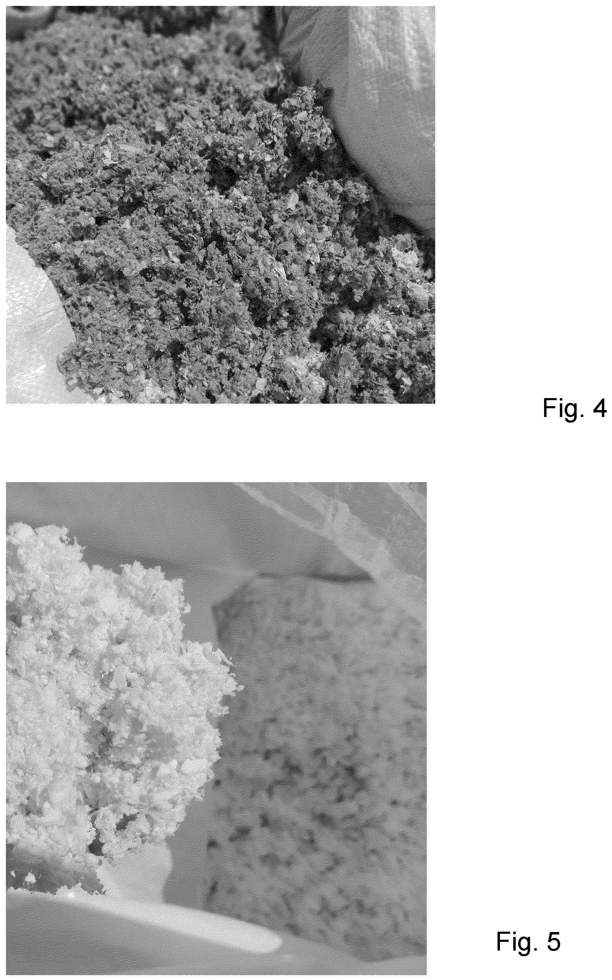

With reference to the exemplary embodiment of fig. 1, the waste textile material is collected and pre-treated to reduce the size of the textile in a textile size reduction device 1. For example, the textile size reduction device 1 can be a cutter machine, suitable for cutting fabrics and garments into pieces, i.e., clippings, or a machine suitable for converting fabrics and/or garments into fibers. The size of the pieces of fabric have been previously disclosed in the description: a sample of light blue polyester fabric reduced to pieces having a size that is at least 90% in the range 2.0mm to 2.5mm is shown in figure 4.

The textile material, after size-reduction pre-treatment, is moved to an extraction chamber 2.

In the extraction chamber 2, the textile material is extracted (treated) with a solvent, to provide a solution comprising solvent and extracted material, said extracted material including at least a dye. During said step b), said solvent, or said solution comprising solvent and extracted material, is circulated through said textile material entering said extraction chamber 2 and exiting said extraction chamber 2. The extraction chamber 2 is kept in a static, i.e., still, condition during step b). The textile materials, e.g. fabrics or garments or fibers, housed within the extraction chamber 2, are, too, in a still, i.e. static, condition, apart for possible movement imparted by the flow of the solvent that is circulated, e.g. with a pump P, through the static extraction chamber 2 and through the textiles. Preferably the textiles are kept in a static condition. In a preferred embodiments the textile material is in a compressed condition; in this embodiment the textile are preferably in the form of fibers or fiber tufts as obtainable by a textile opening process via tearing machines such as those commercialized by Laroche, Dell'Orco & Villani (IT) and Trützschler (DE).

According to embodiments, extraction step b) has a duration of from 2 minutes to 20 minutes, preferably from 5 min to 15 min, more preferably from 7.5 min to 12.5 min., most preferably 10 min.

According to embodiments, the temperature of the solvent (or the solution comprising solvent and extracted material) in the extraction chamber 2 is in the range of from 80°C to 140°C, preferably from 82°C to 135°C. Maximum temperature may be about 110°C when the polyester is not dope dyed but is dyed e.g. with disperse dyes.

Advantageously, the conditions of the extraction step b) can be adjusted according to the composition of the textile material to be treated.

For example, when the textile material is in the form of 100% PET fabrics and/or clippings, dyed with at least one disperse dye, the solvent is preferably DMF, and the temperature of said solvent in said extraction chamber 2 may be in the range of from 85°C to 105°C, preferably about 100°C. For example, when the textile material is in the form of 100% PET fibers dyed with at least one disperse dye, the solvent is preferably DMF, and the temperature of said solvent in said extraction chamber 2 may be in the range of from 80°C to 110°C, preferably from 85°C to 105°C. For example, when the textile material comprises at least 90% by weight of polyester fibers, dyed with at least one disperse dye, and at most 10% by weight of elastane fibers, the solvent is preferably DMF, and the temperature of said solvent in said extraction chamber 2 may be in the range of from 85°C to 105°C, and preferably is about 95°C. For example, when the textile material comprises at least 70% by weight of polyester fibers and at most 30%, by weight of cotton fibers or of a mixture of cotton fibers and elastane, and the polyester fibers are dyed with at least one disperse dye, and the cotton fibers are dyed with at least a dye selected from vat dyes, reactive dyes, pigments, direct dyes and sulfur dyes, the solvent is preferably a mixture of DMF and water comprising a reducing agent and a base, and the temperature of said solvent in said extraction chamber 2, is in the range of from 95°C to 105°C, preferably about 100°C.

After step b) a solution comprising solvent and extracted material (i.e., at least one extracted dye and, optionally, extracted polyurethane materials such as elastane) is obtained, together with treated textiles.

According to the invention, solution comprising solvent and extracted material can be recirculated during step b), by exiting and entering the extraction chamber 2, while keeping both the textiles and the extraction chamber 2 in a static (i.e., still) condition.

According to embodiments, at the end of step b), the textiles are moved to a centrifuge 3 for removal of the residual solution comprising solvent and extracted material in the textiles, according to step c). In embodiments, centrifuging can be carried out in the extraction chamber. For example, when the extraction chamber is a washing machine or a solvent cleaning machine, the extraction chamber may perform centrifugation, and optionally washing with solvent, washing with water and drying. In embodiments, extraction, centrifugation, washing, drying can be performed in one machine, e.g., in a solvent cleaning machine; the same machine can further include a distillation unit.

In embodiments, the solvent that has not been picked up by the textiles can be removed from the extraction chamber 2 and fed to a solvent storage tank 9. The solvent storage tank 9 is further configured to receive the solvent removed from at least the centrifuge 3 and, optionally, from the drying device 4. The solvent in the solvent storage tank 9 is generally a solution comprising solvent and extracted material. The solvent (or the solution comprising solvent and extracted material) can be fed from the solvent storage tank 9 to the extraction chamber 2.

According to embodiments, centrifugation is carried out at g-force in the range of from g-force from 250 to 5000, preferably from 800 and 2000, more preferably from 900 to 1300, e.g., 1200, for a time in the range of from 0.5 to 10 minutes, preferably from 1 to 5 minutes. In embodiments, after centrifugation, the solution of solvent and extracted material is moved back to the extraction chamber 2 for treating another batch of textile material, e.g., a new batch of textile material.

In embodiments, after centrifugation, the textile material may be washed within the centrifuge 3. The washing can be performed, for example, using fresh solvent or fresh mixture of solvent, water, a reducing agent and a base, according to the material to be washed. The fresh solvent or fresh mixture of solvent, water, a reducing agent and a base, are fed to the centrifuge 3 by the fresh solvent tank 6. The temperature of said clean solvent in said centrifuge during the solvent washing step is in the range of 80°C to 110°C, preferably from 85°C to 105°C for polyester fibers and is in the range of from 85°C to 110°C, preferably about 95°C. The washed material is centrifuged to remove the solvent used for washing. The solvent or the mixture of solvent, water, a reducing agent and a base is recovered and preferably fed to the extraction chamber 2 for treating another batch of textile material.

According to Fig. 1, after centrifugation, the textile material is dried in a drying device 4.

When the extracted material in the solution comprising solvent and an extracted material reach a concentration whereby further dye extraction is impaired, the solution comprising solvent and extracted material is fed, from said extraction chamber 2 and/or from said centrifuge 3, to a distillation device 5, whereby said solvent is separated from said extracted material. Distilled solvent is, then, moved to a fresh tank solvent 6 for storage. When required, fresh solvent can be fed from the fresh solvent tank 6 to at least the extraction chamber 2, for example, to adjust the bath ratio textile:solvent. As above mentioned, fresh solvent can be fed from the fresh solvent tank 6 to the centrifuge 3 to perform washing of the textiles.

In an embodiment said textile material is selected from polyester fibers, fabrics consisting of polyester fibers, fabric clippings consisting of polyester fibers, polyester fibers ground into polyester powder, wherein at least part of said polyester fibers is dyed with at least one disperse dye, wherein said solvent is DMF, wherein the temperature of said solvent or said solution comprising solvent and extracted material in said extraction chamber is in the range of 80°C to 110°C, preferably from 85°C to 105°C for polyester fibers and is in the range of from 85°C to 110°C, preferably about 95°C for said fabrics, fabric clippings and polyester powder.

In an embodiment, said textile material comprises at least 90% by weight of polyester fibers and at most 10% by weight of elastane fibers, wherein at least part of said polyester fibers is dyed with at least one disperse dye, wherein said solvent is DMF, wherein the temperature of said solvent or said solution comprising solvent and extracted material in said extraction chamber and preferably in the step of washing in the centrifuge after a first centrifugation is in the range of from 85°C to 105°C, preferably about 95°C.

In an embodiment said textile material comprises at least 50%, preferably 70%, by weight of polyester fibers and at most 50%, preferably 30%, by weight of cotton fibers, wherein at least part of said polyester fibers is dyed with at least one disperse dye and wherein at least part of said cotton fibers is dyed with at least a dye selected from vat dyes, reactive dyes, pigments, direct dyes and sulfur dyes, wherein said solvent is a mixture of DMF and water comprising at least one base and optionally at least one reducing agent, wherein the temperature of said solvent or said solution comprising solvent and extracted material in said extraction chamber and preferably in the step of washing in the centrifuge after a first centrifugation is in the range of from 85°C to 110°C, preferably about 95°C.

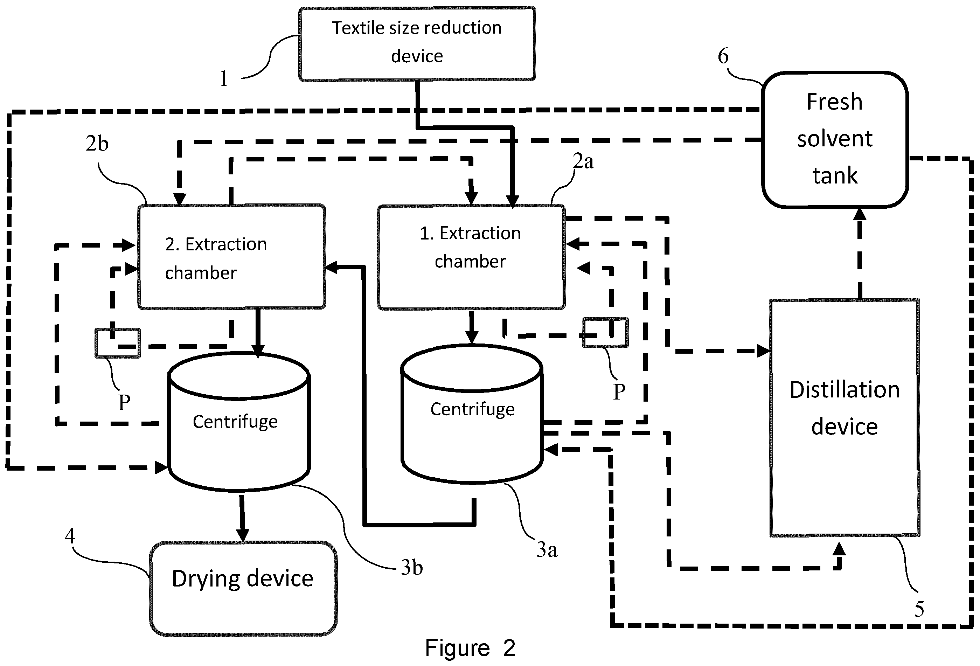

Fig. 2 shows a schematic representation of an embodiment of the process and apparatus of the invention including two extraction chambers (2a and 2b) and two centrifuges.

With reference to the exemplary embodiment of fig. 2, the waste textile material is collected and pre-treated to reduce the size of the textile in a textile size reduction device 1. The textile material, after size-reduction pre-treatment, is moved to a first extraction chamber 2a. In the extraction chamber 2a, the textile material is extracted (treated) with a solvent, to provide a solution comprising solvent and extracted material, said extracted material including at least a dye. Preferably, when the apparatus incudes more than one extraction chambers, the solvent used in the first extraction chamber is the solution comprising solvent and extracted material obtained in the second extraction chamber after the second extraction step b) carried out on the previous batch of textiles that have been treated. The solution comprising solvent and extracted material is recirculated during step b), by exiting and entering the first extraction chamber 2a, while keeping both the textiles and the extraction chamber 2 in a static (i.e., still) condition.

According to embodiments, at the end of step b), the textiles are moved from the first extraction chamber 2a to a first centrifuge 3a for removal of the residual solution comprising solvent and extracted material in the textiles, according to step c). According to embodiments, centrifugation is carried out at a g-force from 250 to 5000 preferably from 800 and 2000, more preferably from 900 to 1300, for a time in the range of from 0.5 to 10 minutes, preferably from 1 to 5 minutes. In embodiments, after centrifugation, the solution of solvent and extracted material is moved back to the extraction chamber 2 for treating another batch of textile material.

The textile material, after centrifugation, is moved from the first centrifuge 3a to a second extraction chamber 2b. In the second extraction chamber 2b, the textile material is further extracted (treated) with a solvent, to provide a solution comprising solvent and extracted material, said extracted material including at least a dye. Preferably, when the apparatus incudes more than one extraction chambers, the solvent used in the second extraction chamber may be fresh solvent. The textile material is kept in a static condition within extraction chamber 2b, during the entire extracting step.

In analogy to the embodiment of Figure 1, with reference to Figure 2, in embodiments, the solvent that has not been picked up by the textiles can be removed from the extraction chambers 2a and 2b and fed to at least one solvent storage tank (not shown in the figures). The at least one solvent storage tank is further configured to receive the solvent removed from at least the centrifuges 3a and 3b and, optionally, from the drying device 4. The solvent in the solvent storage tank is generally a solution comprising solvent and extracted material. The solvent (or the solution comprising solvent and extracted material) can be fed from the at least one solvent storage tank to the extraction chambers 2a and 2b.

In embodiments, in multiple extraction process, all extraction chambers will be fed with fresh solvent in the beginning of the process (i.e., for treating the first batch of waste textiles) and the solvent will be re-used in the same extractors till reaching the saturation point, i.e., a condition wherein the extracted material in the solvent reach a concentration whereby further dye extraction is impaired, e.g., after extraction of at least 20 batches, preferably at least 30, more preferable at least 40, for example 50. Starting from the second batch of waste textile to be treated, fresh solvent is fed only to the last extraction chamber.

Similarly to extraction chamber 2a, the obtained solution comprising solvent and extracted material is recirculated during step b), by exiting and entering the second extraction chamber 2b, while keeping both the textiles and the extraction chamber 2b in a static (i.e., still) condition.

At the end of step b), the textiles are moved from the second extraction chamber 2b to a second centrifuge 3b for removal of the residual solution comprising solvent and extracted material in the textiles, according to step c). In embodiments, after centrifugation, the solution of solvent and extracted material is moved back to the second extraction chamber 2b for treating another batch of textile material.

Preferably, the solution comprising solvent and extracted material obtained after one or more extraction steps in the second extraction chamber 2b is fed to the first extraction chamber 2a to extract a different batch of textiles.

In embodiments, after centrifugation in the second centrifuge 2b, the textile material may be washed within the second centrifuge 3b. The washed material is centrifuged to remove the solvent used for washing. The solvent or the mixture of solvent, water and a reducing agent and a base is recovered and preferably moved to the second extraction chamber 2b for treating another batch of textile material.

According to Fig. 2, after the second centrifugation in the second centrifuge 3b, the textile material is dried in a drying device 4.

When the extracted material in the solution comprising solvent and an extracted material reach a concentration whereby the solvent is saturated and further dye extraction is impaired, the solution comprising solvent and extracted material is fed to a distillation device 5, whereby said solvent is separated from said extracted material. Distilled solvent is, then, moved to a fresh tank solvent 6 for storage. When required, fresh solvent can be fed from the fresh solvent tank 6 to at least the second extraction chamber 2b, for example, to adjust the bath ratio textile:solvent. As above mentioned, fresh solvent can be fed from the fresh solvent tank 6 to the second centrifuge 3b to perform washing of the textiles. Optionally, fresh solvent can be fed from the fresh solvent tank 6 to the first centrifuge 3a, to perform washing of the textile.

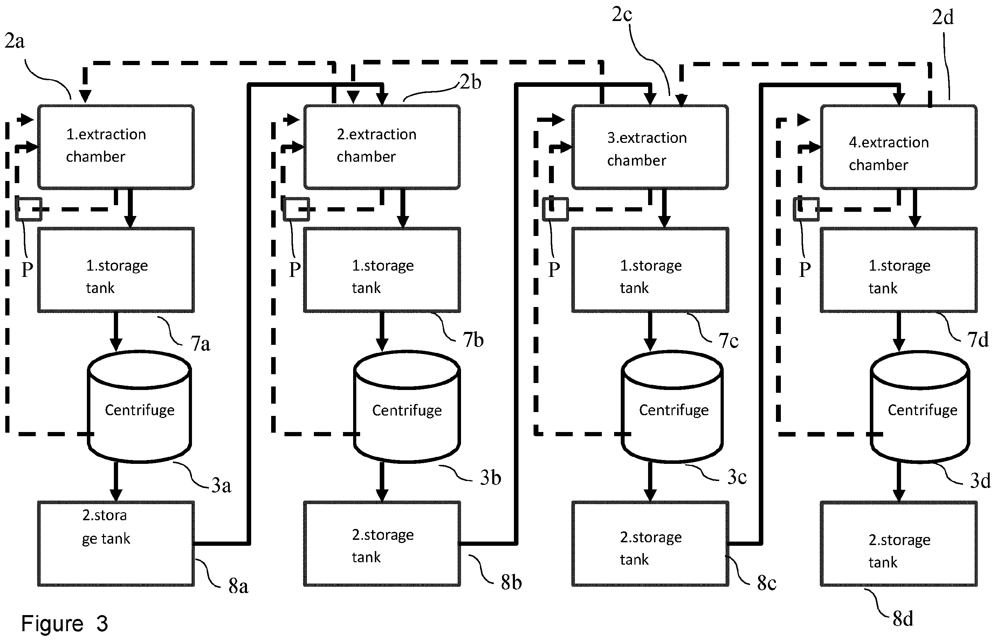

Fig.3 shows a schematic representation of an embodiment of the process including a plurality (four) extraction chambers and a plurality (four) of centrifuges.

In the embodiment of Fig. 3, a plurality of storage tanks, particularly a plurality of first storage tanks 7a, 7b, 7c, 7d and a plurality of second storage tanks 8a, 8b, 8c, 8d are shown. One first storage tank 7a, 7b, 7c, 7d is provided after each extraction chamber 2a, 2b, 2c, 2d and one second storage tank 8a, 8b, 8c, 8d is provided after each centrifuge 3a, 3b, 3c, 3d.

According to embodiments, the textile material obtained in step b), i.e., the textile material after extraction with solvent, can be moved from extraction chambers 2a, 2b, 2c, 2d to first storage tanks 7a, 7b, 7c, 7d, for example, when the centrifuges 3a, 3b, 3c, 3d are not able to hold the entire amount of textile material treated in the reaction chambers 2a, 2b, 2c, 2d, the textile material obtained in step b) can be moved from the extraction chambers 2a, 2b, 2c, 2d to first storage tanks 7a, 7b, 7c, 7d so that a further batch of textile material can be extracted in the extraction chambers 2a, 2b, 2c, 2d, while the centrifugation of the textile material obtained in step b) is completed.

In the embodiment of Fig. 3, the textile material exiting from the centrifuges 3a, 3b, 3c 3d is moved to second storage tanks 8a, 8b,8c, 8d. The material in the first three second storage thanks 8a, 8b, 8c in then fed to the subsequent extraction chamber (i.e., extraction chamber 2b, 2c, 2d) for further extraction. The textile material in the last second storage tank 8d is free, or substantially free, of dye and possible polyurethane and is ready to be dried.

The solution comprising solvent and extracted material obtained in each extraction chamber is recirculated during step b), by exiting and entering the same extraction chamber, while keeping both the textiles and the extraction chamber in a static (i.e., still) condition.

In embodiments, after centrifugation, the solution of solvent and extracted material is moved back to the previous extraction chamber for treating another batch of textile material. For example, with reference to Fig. 3, the solution of solvent and extracted material obtained after centrifugation in centrifuge 3a is moved back to extraction chamber 2a, the solution of solvent and extracted material obtained after centrifugation in centrifuge 3b is moved back to extraction chamber 2b, the solution of solvent and extracted material obtained after centrifugation in centrifuge 3c is moved back to extraction chamber 2c and the solution of solvent and extracted material obtained after centrifugation in centrifuge 3d is moved back to extraction chamber 2d.

According to the embodiment of Fig. 3, the solvent used in the last extraction chamber 2d may be fresh solvent. After the extraction, a solution including solvent and extracted material is obtained. The solution including solvent and extracted material obtained in the last (fourth) extraction chamber 2d may be fed to the previous (third) extraction chamber 2c, for the third extraction step of the subsequent batch of textiles, particularly, after that the solvent, i.e., solution comprising solvent and extracted material, used in first extraction tank 2a reached a concentration of extracted material whereby further dye extraction is impaired, and the solution comprising solvent and extracted material is moved from the first extraction chamber 2a to the distillation device. The solution including solvent and extracted material obtained in the third extraction chamber 2c may be fed to the previous (second) extraction chamber 2b, for the second extraction step of the subsequent batch of textiles. The solution including solvent and extracted material obtained in the second extraction chamber 2b may be fed to the previous (first) extraction chamber 2a, for the first extraction step of the subsequent batch of textiles. Advantageously, the amount of dye in the textile is progressively reduced from the first extraction chamber 2a to the last extraction chamber 2d, while the concentration of the extracted material, particularly dye, in the solvent (i.e., the solution comprising solvent and extracted material) used in the extraction steps decreases the first extraction chamber 2a to the last extraction chamber 2d. In other words, the solution including solvent and extracted material obtained in the last (fourth) extraction chamber 2d is sent to the third extraction chamber 2c, for the third extraction step of the subsequent batch of textiles, after that the solvent used in first extraction chamber 2a is sent to distillation device, and the solvent used in the second extraction chamber 2b is sent to the first extraction chamber 2a, and the solvent used in the third extraction chamber 2c is sent to the second extraction chamber 2b.

Figure 4 and Figure 5 visually show the reduction in dye content from the initial polyester material in reduced size (fig. 4) to the same material at the end of the process (fig. 5).

The invention will be further illustrated by reference to the following non limiting examples.

### EXAMPLE 1

*1.5 kg of waste textile fabrics (90 % PET (dispersed dyed) - 10 % cotton (reactive dyed)) were put into the extraction chamber. 15 L of solvent (DMF) were added to the extraction chamber and were heated to 90-95 degC. After 10 min. extraction with circulation of solvent, textiles were sent directly to the centrifuge and solvent was removed at 1200 g-force for 2-3 min. Afterwards textiles were sent to second extractor and 15 L of DMF-water were poured in presence of reducing agent (Na₂S₂O₄) and base (NaOH) to remove reactive dyes at 90-95 degC for 10 min. Drying process at 80-90 degC were conducted after second centrifuge process. The solvents are re-collected and re-used.*

### EXAMPLE 2

*1.5 kg of waste textiles (90 % PET (dispersed dyed) - 10 % cotton (reactive dyed)) were put into the extractor. 15 L of DMF-water (in presence of reducing agent and base) were added to the extraction chamber and were heated at 90-95 degC. After 10 min. extraction with circulation of solvent, textiles were sent directly to the centrifuge and solvent was removed at 1200 g-force for 2-3 min. Afterwards textiles were sent to second extraction chamber and 15 L of DMF were poured into it to remove remaining dyes at 90-95 degC for 10 min. Drying process at 80-90 degC were conducted after second centrifuge process. The solvents are re-collected and re-used.*

The claimed process and apparatus thus allows to remove dyes from waste textiles, particularly disperse dyes from polyester fibers and vat dyes, reactive dyes, pigments, direct dyes and sulfur dyes from cotton fibers. The resulting textiles may then be recycled in a way known per se.

## Claims

1. A process for removing dyes from a textile material, particularly a waste textile material, wherein said textile material includes at least 50% by weight, preferably at least 60% by weight, more preferably at least 70% by weight, of polyester, said process comprising the following steps:
a) providing a batch of said textile material in an extraction chamber;
b) extracting said batch of said textile with a solvent to provide a solution comprising solvent and extracted material, said extracted material including at least a dye, wherein said textile material is kept in a still condition and said solvent is circulated through said textiles and said extraction chamber;
c) removing said solution of solvent and extracted material from said textile;
**characterized in that** said solution comprising solvent and extracted material obtained in step b) and/or c) is used as a solvent to extract dye from another batch of textile material, and **in that** said steps b) and c) are repeated, preferably for a preset number of cycles or until the amount of extracted material in said solution comprising solvent and extracted material reach a concentration whereby further dye extraction is impaired.

2. The process according to claim 1, wherein at least part of said polyester is dyed, preferably dyed with at least one disperse dye or dope-dyed and wherein said textile material is selected from fibers, fiber tufts, filaments, yarns, fabrics, clippings of fabrics, garments, clippings of garments and mixtures thereof, preferably said waste textile is pressed in said extraction chamber or in a basket housed in said extraction chamber.

3. The process according to any previous claim, wherein said step c) includes a step of separating said solution comprising solvent and extracted material from said textile by centrifuging, wherein said step c) is carried out in a centrifuge, wherein said extraction chamber is preferably configured to operate as centrifuge.

4. The process according to claim 3, wherein, after said step c) solvent, preferably fresh solvent, is fed to the centrifugated textile present in said centrifuge and a washing step of said textile is carried out in said centrifuge to remove dyes from said centrifugated textile.

5. The process according to any previous claim, wherein said extraction chamber is a first extraction chamber, and wherein said textile material, after said first extraction step b), is fed from said first extraction chamber to a first centrifuge for a first removal step c), from said first centrifuge to a second extraction chamber for a second extraction step b) and from said second extraction chamber to a second centrifuge for a second extraction step c), whereby said first and second extraction steps b) and removal steps c) are carried out in two different extraction chambers and two different centrifuges, respectively.

6. A process according to claim 5, wherein the solvent removed from a second extraction chamber and/or said second centrifuge, preferably from said second extraction chamber, is fed to said first extraction chamber.

7. A process according to any previous claim, wherein steps b) and c) are repeated more than twice in more than two extraction chambers and centrifuges, and wherein the solvent removed from any extraction chamber different from said first chamber is fed to the previous extraction chamber, said solvent used in said step b) being in the form of a solution comprising solvent and an extracted material, said extracted material including at least a dye.

8. The process according to any previous claims, wherein said solvent comprises DMF or DMAC or a mixture of DMF or DMAC with alkali water, or mixtures thereof; preferably the temperature of said solvent or said solution comprising solvent and extracted material in said extraction chamber, optionally during said washing step with solvent, is in the range of 80°C to 140°C, preferably 82°C to 135°C, more preferably 82°C to 110°C.

9. The process according to any previous claims, wherein the bath ratio textile/solvent (kg/liters) is in the range from 1/3 to 1/20, preferably from 1/3.5 to 1/12, more preferably from 1/4 to 1/10.

10. A process according to any previous claim, wherein said step c) is carried out in a centrifuge at a g-force in the range of from 250 to 5000 preferably from 800 and 2000, more preferably from 900 to 1300, for a time in the range of from 0.5 to 10 minutes, preferably from 1 to 5 minutes.

11. A process according to any previous claim from 1 to 10, wherein said textile comprises polyester fibers and further comprises at least a polyurethane material, preferably elastane; preferably said textile material comprises at least 90% by weight of polyester fibers and at most 10% by weight of elastane fibers, wherein at least part of said polyester fibers is dyed with at least one disperse dye, wherein said solvent is DMF, wherein the temperature of said solvent or said solution comprising solvent and extracted material in said extraction chamber is in the range of from 85°C to 105°C, preferably about 95°C.

12. A process according to any previous claim from 1 to 12, wherein said textile comprises polyester fibers and further comprises at least a cellulosic material, preferably cotton, more preferably cotton fibers, preferably said textile material comprises at least 50%, preferably 70%, by weight of polyester fibers and at most 50%, preferably 30%, by weight of cotton fibers, wherein at least part of said polyester fibers is dyed with at least one disperse dye and wherein at least part of said cotton fibers is dyed with at least a dye selected from vat dyes, reactive dyes, pigments, direct dyes and sulfur dyes, wherein said solvent is a mixture of DMF and water comprising at least one base and optionally at least one reducing agent, wherein the temperature of said solvent or said solution comprising solvent and extracted material in said extraction chamber and optionally in said washing step is in the range of from 85°C to 110°C, preferably about 95°C.

13. A process according to any previous claim from 1 to 10, wherein said textile comprises polyester fibers and further comprises at least a polyurethane material, preferably elastane and at least a cellulosic material, preferably cotton, more preferably cotton fibers, wherein said textile material preferably comprises at least 50%, preferably 70%, by weight of polyester fibers and at most 50%, preferably 30%, by weight of cotton fibers and elastane fibers, wherein at least part of said polyester fibers is dyed with at least one disperse dye and wherein at least part of said cotton fibers is dyed with at least a dye selected from vat dyes, reactive dyes, pigments, direct dyes and sulfur dyes, wherein said solvent is a mixture of DMF and water comprising a base and optionally at least one reducing agent, wherein the temperature of said solvent or said solution comprising solvent and extracted material in said extraction chamber and optionally in said washing step is in the range of from 95°C to 105°C, preferably about 100°C.

14. A process according to any previous claim, wherein said solution obtained in step b) and/or c) is used as the solvent to extract dye from another batch of textile material, and in that said steps b) and c) are repeated using said solution as said solvent up to 20 times, preferably up to 40 times, more preferably up to 60 times.

15. An apparatus for removing dyes from a textile, preferably a fabric, in a process according to any previous claim, comprising at least one extraction chamber (2) configured to treat said textile material with said solvent, pump means or circulation means (P) to circulate said solvent through said extraction chamber (2) and said waste textile, at least a centrifuge (3) for separating said solution comprising solvent and extracted material from said textile material, at least one fresh solvent storage tank (6) and at least one distillation device (5), wherein said fresh solvent storage tank (6) is configured to feed said fresh solvent to said extraction chamber (2), and configured to receive said solvent from said distillation device (5), and wherein said distillation device (5) is configured to receive said solution comprising solvent and extracted material from said extraction chamber (2) and/or said centrifuge (3), to separate said extracted material from said solvent; said apparatus optionally comprising at least one storage tank (7a-7d), configured to receive said textile material from said extraction chamber (2) and to feed said textile material to said centrifuge (3); preferably said extraction chamber (2) being configured to operate as said centrifuge (3).

16. The apparatus according to claim 15, wherein said apparatus comprises a plurality of extraction chambers (2a-2d) and a plurality of centrifuges (3a-3d), wherein said extraction chambers (2a-2d) and said centrifuges (3a-3d) are arranged in a series, means for feeding said textile along said series of extraction chambers (2a-2d) and centrifuges (3a-3d) to provide a flow of textiles, wherein at least one centrifuge (3) is connected, directly or indirectly, with an extraction chamber (2) upwards with respect to the flow of textile and is connected to another extraction chamber (2) downwards with respect to said flow of textiles.

17. An apparatus according to claim 15 or 16, wherein each extraction chamber is connected to the previous extraction chamber with solvent feeding means configured to feed said solution comprising solvent and extracted material exiting from each extraction chamber to said previous extraction chamber and wherein only the last extraction chamber of said series is connected to said fresh solvent storage tank, said fresh solvent storage tank being configured to feed said solvent to said last extraction chamber only.
